# EUROPÄISCHE PATENTSCHRIFT

(11) **EP 1 100 418 B1**
(45) Veröffentlichungstag und Bekanntmachung des Hinweises auf die Patenterteilung: **31.03.2004**
(21) Anmeldenummer: 99932882.6
(22) Anmeldetag: 14.07.1999
(51) Int. Cl.: A61F 2/68, B25J 9/14, F15B 15/10

(54) **WURMFÖRMIGER ARBEITSMECHANISMUS**
WORM-LIKE OPERATING MECHANISM
MECANISME DE TRAVAIL VERMICULAIRE

(30) Priorität: 24.07.1998 DE 19833340
(43) Veröffentlichungstag der Anmeldung: 23.05.2001
(73) Patentinhaber: Forschungszentrum Karlsruhe GmbH, 76133 Karlsruhe (DE)
(72) Erfinder: SCHULZ, Stefan, D-75015 Bretten (DE)
(86) Internationale Anmeldenummer: PCT/EP1999/004970
(87) Internationale Veröffentlichungsnummer: WO 2000/004852

(56) Entgegenhaltungen:
- WO-A-86/03816
- WO-A-90/15697
- WO-A-96/35877
- WO-A-97/22782
- DE-A- 19 617 852
- GB-A- 2 240 083
- US-A- 3 284 964
- US-A- 4 502 280
- US-A- 4 784 042
- US-A- 5 317 952
- US-A- 5 662 587

## Beschreibung

Die Erfindung betrifft einen mit pneumatischen oder hydraulischen Druckmedium betriebenen wurmförmigen Arbeitsmechanismus 1 zum Heben, Fixieren, Greifen, Bewegen und Verstellen von Gegenständen, der streck- und/oder in jede Richtung schwenkbar ist und bei Beenden der Druckeinwirkung auf seine Aktoren 2 von selbst in seine Ausgangslage zurückkehrt. Solche Mechanismen eignen sich zur Gestaltung von Roboterarmen, Gliedmaßenprothesen oder als steuerbare bewegliche Teile in der medizinischen Instrumententechnik.

Bisher bekannte Mechanismen verfügen über verhältnismäßig aufwendige und kostenintensive Aufbauten und erlauben doch nur eine eingeschränkte Beweglichkeit oder geringe Kraftübertragung.

In der DE 39 18 955 A1 ist der technische Nachbau des Muskelprinzips beschrieben. Ein ballonartiger Behälter besteht aus einer flexiblen Haut, in den Gas oder Flüssigkeit über einen Zugang gepumpt oder daraus abgepumpt wird. Der Ballon ist von einem Netz umgeben, das sich seilartig bis zu einer Maximallänge auseinander ziehen lässt, dabei hat der eingeschlossenen Ballon kein Volumen mehr. Der Ballon kann nun bis zu einem Maximalvolumen gefüllt werden, wobei sich die Netzenden bis auf einen Minimalabstand zusammenziehen. Das Netz spannt sich dabei um den Ballon und verhindert ein weiteres zerstörerisches Expandieren. Mit Hilfe dieser Einrichtung lässt sich ein Gelenk wie das des Ellenbogens betätigen, die Bewegung bleibt auf einen Freiheitsgrad beschränkt.

Aktoren des künstliche Muskeltyps werden in der GB 2 240 083 A beschrieben. Hierzu gibt es kanalartige Elemente, die räumliche Zustände zwischen einem völlig zusammengelegten (Nullvolumen) und maximal ausgedehnten Volumen (Maximalvolumen) einnehmen können, d. h. sie haben Sollknickstellen oder Sollknicklinien. Über entsprechendes Befüllen bzw. Entleeren der Kanäle kann der notwendige Volumenzustand eingestellt werden. Durch Aneinanderreihen dieser Elemente lassen sich u. a. arm- oder tentakelartige Gebilde aufbauen. Die Kanäle selbst sind in Trägerfolien gehüllt oder eingebettet, die eine Volumenbegrenzung festlegen.

Die WO 90/15697 zeigt, wie sich druckmittelbetriebene, zapfenartige Formen derartig über den Druckmittelfüllzustand betreiben lassen, dass Streck- und Beugebewegungen zustande kommen. Kanalartige Strukturen sind hierzu derartig an weitere Folien gebunden, dass sich beim Befüllen der Kanäle die Gesamtstruktur zu einer vorgesehen Form strafft. Die Bewegung der Struktur ist dabei auf einen Freiheitsgrad beschränkt, ausgehend von einer zusammengefalteten, schlaffen Struktur zu der ausgefahrenen gespannten und umgekehrt.

Das Verfahren zur planaren Herstellung von pneumatischen und fluidischen Miniaturmanipulatoren in der DE 196 17 852 A1 beschreibt die Herstellung von aufblähbaren Taschenstrukturen aus zwei aufeinander gelegten Folien, die entlang einer Linienstruktur verschweißt werden und einen Zugangskanal für die Befüllung und Entleerung haben. Auch dort kann je nach Befüllung ein Volumen zwischen Null und einem Maximalwert eingenommen werden. Die dargestellten und beschriebenen Konstruktionen erlauben aber nur ebene Schwenkungen, haben also nur einen Freiheitsgrad.

In der US 4 784 042 wird ein wurmförmigen Arbeitsmechanismus beschrieben, mit dem Gegenstände gehoben, fixiert, gegriffen und bewegt werden können. Seine Antriebsmittel sind betätigbare Aktoren. Der Arbeitsmechanismus ist aus seiner gestreckten Achse in jede Richtung schwenkbar und kehrt bei Beenden der Druckeinwirkung auf seine Aktoren von selbst in seine Ausgangslage zurück. Der Arbeitsmechanismus besteht aus mindestens drei Aktoren, die aus einem reißfesten, biegeschlaffen, druckmediumdichten Material sind. Jeder Aktor besteht aus einem Paket aus aneinandergereihten Kissen oder Kammern. Unmittelbar benachbarte Kissen oder Kammern sind über einen Kanal miteinander verbunden. Jedes Paket aus solchen Kissen/Kammern hat mindestens einen Zu gangskanal, über den es mit Druckmittel befüllt oder das Druckmittel daraus abgepumpt wird.

Die Aktoren sind unter Bildung eines Lumens und unter Aufrechterhaltung des Kissen- oder Kammernpakets zum wurmförmigen Arbeitsmechanismus miteinander gekoppelt und sind unabhängig voneinander befüllbar oder evakuierbar. Das Kammervolumen jeden Aktors ist durch Druckmediumbefüllung oder Druckmediumabpumpen kontinuierlich zwischen einem Maximalwert und Null einstellbar. Dadurch streckt sich der Aktor (2) durch die aneinandergereihten, entsprechend gefüllten Kissen oder Taschen bis zu einer Maximallänge und/oder beugt sich bis zu einer Maximalschwenkung in eine vorgegebene Richtung.

Liegt in der US 4 784 042 ein pneumatisch, also mit Gas betriebenes System vor, wird in der WO-A 96/35 877 ein funktionell und baulich ähnliches Betätigungsorgan beschrieben, das auch hydraulisch, also mit Flüssigkeit, betrieben werden kann. Pneumatische und hydraulische Steuerung ist daher gleichwertig und wird je nach den vorliegenden Gegebenheiten wahlweise eingesetzt.

Der Erfindung liegt die Aufgabe zugrunde, einen Arbeitsmechanismus zur Erzeugung von räumlichen Schwenk- und Streckbewegungen anzugeben, der in der Lage ist, in einer eng begrenzten Umgebung große Stellwege und Kräfte zu erzeugen.

Die Aufgabe wird durch einen Antriebsmechanismus gemäß den kennzeichnenden Merkmalen des Anspruchs 1 gelöst.

Jeder Aktor besteht aus zwei aufeinandergelegten Folien, die entlang eines vorgegebenen Linienverlaufs unter mindestens einer Zugangskanalbildung miteinander druckmediumdicht verbunden, verschweißt oder verklebt, sind.

Oder jeder Aktor ist aus torusartigen Kissen oder Kammern aufgebaut, die mäanderförmig aneinander liegen.

Oder jeder Aktor ist ein faltenbalgförmiger Schlauch, und scheibenförmige Stützelemente mit Ausnehmungen, in die sich die entsprechende Falte des jeweiligen Aktors legt, halten die Aktoren zusammen.

Jeder Aktor des Antriebsmechanismus ist aus einem nichtmetallischen Material. Je nach Zweck ist das Antriebsprinzip pneumatisch oder hydraulisch.

In den Unteransprüche 2 bis 5 werden Maßnahmen beschrieben, wie die Kissen eines Aktors aneinander liegen.

Nach Anspruch 2 sind die unmittelbar aneinanderliegende Kissen eines Aktors mindestens punktuell oder mindestens durch Linienabschnitte miteinander verbunden, und Halteringe halten die Aktoren zusammen.

Nach Anspruch 3 hält eine Aufeinanderfolge von abwechselnd einem Stützring und einem Haltering die mäanderförmigen Faltenpakete des Aktors aufrecht.

Nach Anspruch 4 ist ein an einer außenliegenden Knickkante einliegendes Stützelement eine Scheibe mit zentralem Loch zur Mitbildung des Lumens und hat an der Stelle eines Kissenlochs ebenfalls ein Loch, so dass jeder Aktor selbst auch ein Lumen bildet.

Schließlich sind nach Anspruch 5 unmittelbar benachbarte torusförmige Kissen entlang einer Kreislinie (11) punktförmig oder linienförmig miteinander verbunden, beispielsweise verklebt oder verschweißt, so dass die Mäanderform des Autors stets erhalten bleibt und der Aktor selbst auch ein Lumen bildet, wodurch die Stützscheiben entfallen und allenfalls noch Stützringe durch die innen liegenden Falten zum Zusammenhalt der Aktoren notwendig sind.

Die weiteren Unteransprüche 6 bis 9 beschreiben Rückstelleinrichtungen.

Nach Anspruch 6 ist zur Unterstützung der Beugung oder der Rückkehr in die Ausgangslage eine zugelastische Rückstelleinrichtun g angebracht.

Die zugelastische Rückstelleinrichtung verläuft nach Anspruch 7 im Lumen, ist schlauch- oder schraubenfederartig und liegt an den innen liegenden Aktorrändern an oder presst sich dort an.

Nach Anspruch 8 verläuft die elastische Rückstelleinrichtung außerhalb des Lumens, und zwar im freien Winkelraum zwischen den Aktoren außerhalb des Halterings und innerhalb des Stützrings sofern der Außendurchmesser des Halterings kleiner als der Innendurchmesser des Stützrings ist, oder außerhalb des Stützringes oder in Ausnehmungen am Stützring, die im freien Winkelraum zwischen den Aktoren an dem Stützring oder der Stützscheibe, falls deren Durchmesser so groß ist, vorhanden sind, oder durch Löcher in den Stützscheiben und/oder, falls deren Durchmesser so groß ist wie der Haltescheiben, die dort in den freien Winkelräumen zwischen den Aktoren vorhanden sind.

Schließlich besteht die Rückstelleinri chtung nach Anspruch 9 aus elastischen seilförmigen Rückstellelementen, die durch das Lumen eines jeden Aktors verlaufen.

Der Arbeitsmechanismus muss verankert werden können. In welche Art und Weise das eingerichtet werden kann, ist in den Unteransprüchen 10 bis 12 beschrieben.

Nach Anspruch 10 hat der Arbeitsmechanismus in seinem proximalen und/oder distalen Bereich eine Verankerungseinrichtung, mit der/denen derselbe an vorgesehenem Ort ein- oder beidseitig fixiert werden kann.

Nach Anspruch 11 ist die Verankerungseinrichtung ein verschraubbarer oder einrastender Flansch, ähnlich einem Bayonettverschluß.

Nach Anspruch 12 ist die Verankerungseinrichtung aus Aktormaterial oder aus dehnbarerem Material hergestellt und ist mindestens ein mit Druckmittel separat befüllbares, ringförmiges Kissen oder besteht aus um den Umfang mindestens einmal ringförmig verteilten, separat befüllbaren Kissen, das oder die sich in engen Räumen oder in Kanälen beim Befüllen gegen die Wand schmiegend presst oder pressen. Mit der Verankerungseinrichtung an beiden Enden des Antriebsmechanismus ist aber auch ein wurm- oder raupenartiges Fortbewegen möglich. Dafür z. B. muss sich zunächst nur das proximale Verankerungskissen aufblähen und an die Wand pressen, dann kann der Mechanismus gestreckt werden und am distalen Ende durch das aufgeblähte Kissen verankert werden. Das proximale Verankerungskissen wird jetzt entleert und der Arbeitsmechanismus nachgezogen. Die Rückwärtsbewegung läuft entsprechend umgekehrt ab. Somit ist eine Fortbewegung in gekrümmten Kanalsystemen ohne weiteres möglich.

Der Antriebsmechanismus kann zur Hebevorrichtung, Gelenk-, Greif- oder Haltevorrichtung, als Bewegungsmechanismus, Roboterarm, Gliedmaßen- wie Arm-, Hand- oder Beinprothese ausgebaut werden. Er kehrt aus der gekrümmten Lage in die gerade zurück und umgekehrt. Neben der Beugung ist eine Verlängerung des Antriebsmechanismus gegeben.

Mit dem wurmartigen Antriebsmechanismus (amerikanisch: inchworm) steht ein prinzipielles Antriebselement zur Verfügung, mit dem eine sehr hohe Beweglichkeit mit kleinen Biegeradien bei großem Biegewinkel besteht. Er hat aufgrund der zum Aufbau verwendeten Materialien ein sehr kleines Eigengewicht bei gleichzeitiger Fähigkeit, große Kräfte zu übertragen. Der Aufbau ist konstruktiv einfach und kostengünstig, da das Material billig und die Verarbeitung desselben zunächst zum Aktor und schließlich die Komposition zum Antriebsmechanismus einfach ist. Dennoch gestattet der Antriebsmechanismus eine unkomplizierte und anwendungsspezifische Anpassung in vielerlei Einsatzgebieten, er kann nämlich bei Bedarf vollkommen metallfrei aufgebaut werden. Das Endprodukt ist aufgrund seiner einfachen Herstellungsweise und seiner breiten Einsatzmöglichkeit wirtschaftlich und aufgrund seiner Leistungsfähigkeit technisch attraktiv.

Die Erfindung wird im folgenden und anhand der Zeichnung eines Durchführungsbeispiels näher erläutert. Es zeigen:
Figur 1a den Antriebsmechanismus axial völlig zusammengelegt,
Figur 1b den Antriebsmechanismus in axial gestreckter Situation,
Figur 1c den Antriebsmechanismus in gebeugter Situation,
Figur 2a die Stützelemente des Antriebsmechanismus,
Figur 2b die Lage der Kissen der drei Aktoren zur Achse des Antriebmechanismus,
Figur 2c Stütz- und Haltescheiben,
Figur 3a den Aktor in seiner geometrisch einfachsten Form, der Schlauchform,
Figur 3b den Aktor in ausgeprägter Kissenform,
Figur 3c das Verankerungskissen in Ringform und in Sternform,
Figur 4a den Antriebsmechanismus mit durch das Lumen geführtem und in ihm anliegenden, biegsamem und dehnbarem Schlauch in Ausgangssituation,
Figur 4b den Antriebsmechanismus mit durch das Lumen geführtem und in ihm anliegenden, biegsamem und dehnbarem Schlauch in gestreckter Situation,
Figur 4c den Antriebsmechanismus mit durch das Lumen geführtem und in ihm anliegenden, biegsamem und dehnbarem Schlauch in gebeugter Situation.
Figur 5a den Einzelaktor mit torusförmigen Kissen, mäanderförmig zusammengelegt,
Figur 5b die dafür nur notwendige eine Stützscheibe,
Figur 5c den Aktor mit torusförmigen Kissen und kreisförmiger Verklebelinie,
Figur 6a den Arbeitsmechanismus mit faltenbalgartigen Aktoren, zusammengelegt,
Figur 6b den Arbeitsmechanismus mit faltenbalgartigen Aktoren, gestreckt,
Figur 6c den Arbeitsmechanismus mit faltenbalgartigen Aktoren, gebeugt,
Figur 6d die dafür nur notwendige eine Stützscheibe.

Im Durchführungsbeispiel besteht der Antriebsmechanismus 1 aus drei gleichverteilt um die Achse 3 desselben angebrachte Aktoren 2. Figur 1a zeigt ihn in seiner kürzesten Situation, d. h. alle drei Aktoren 2 sind völlig evakuiert, das Druckmedium, gasförmig oder flüssig, ist vollständig entnommen. Damit werden die Aktoren aufgrund des fehlenden Druckmediumgegendrucks durch den stets vorhandenen Luftdruck zusammengedrückt.

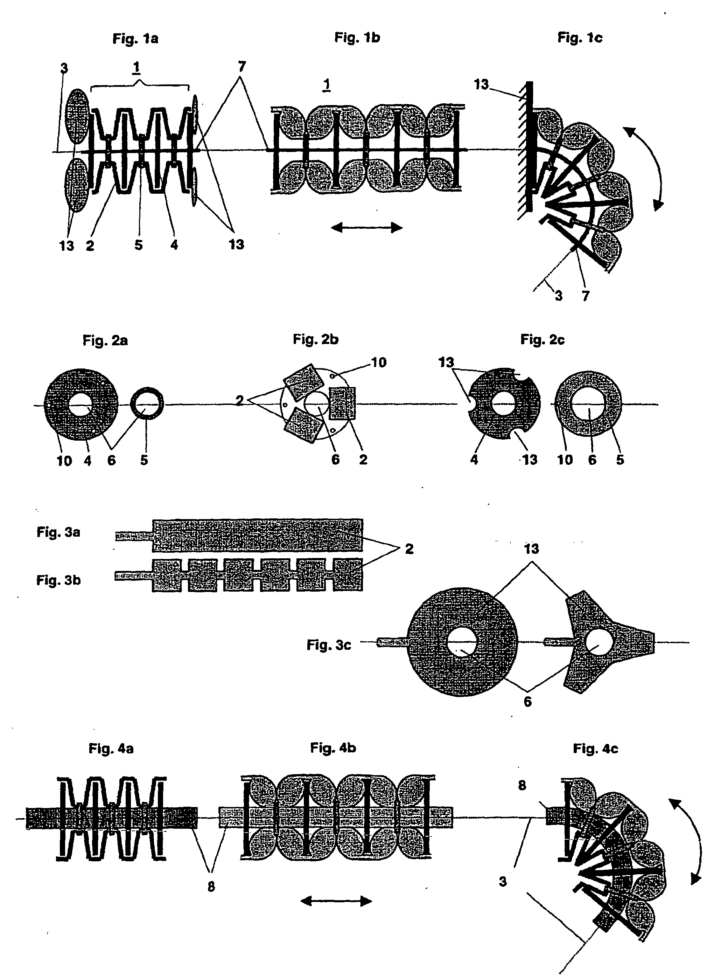

Alle drei Aktoren 2 werden über das scheibenförmige Stützelemente 4 und das ringförmige Halteelement 5 in einer mäanderförmigen Lage gehalten. Die kleinen ringförmigen Halteelemente 5 sind elastisch und ziehen die Aktoren auf die Achse 3 hin zusammen, die großen, scheibenförmigen Stützelemente 4 sind mehr oder weniger oder zumindest so steif, daß sie die Aktoren 2 radial auseinander halten. Die abwechselnde Anordnung der Stützelemente 4, 5 erzeugt die mäanderförmigen Aktoren 2 unter Bildung des Lumens 6 (Figur 2b). Das dicker eingezeichnete Element auf der Achse 3 im Bereich des Antriebmechanismus 1 zeigt schematisch das elastische, entlang der Außenkontur verlaufende Rückstellelement 7, das die Rückstellung bei Aktorevakuierung unterstützt.

Die Stützelemente 4 und 5 sind in Figur 2a nochmals in ihrer einfachen Form in der Draufsicht gezeichnet. Das große, ringscheibenförmige Stützelement 4 ist zum Aufbringen der stützenden Wirkung ausreichend steif. Die zentrale Bohrung in ihm ist gleichzeitig die Beschränkung des Lumendurchmessers. Das kleine Stütz- oder Halteelement 5 ist ebenfalls steif, weil es dem Aufblähen (Volumen vergrößern) der Aktoren 2 und dem damit einhergehenden, gegenseitigen Auseinanderdrücken der aneinandergereihten Kissen örtlich entgegenwirken muß. Das Halteelement 5 kann aber auch elastisch sein, sofern beim Aufblähen der Aktoren 2 deren mäanderförmige Faltung durch eine ausreichend zusammenziehende Gegenkraft des elastischen Halteelements 5 erhalten bleibt. Beide Stützelemente 4, 5 in ihrer abwechselnden Anordnung und die mäanderförmig gefalteten Aktoren 2 bewirken letztlich die wurmförmige Gestalt des Antriebmechanismus 1. Ein Schnitt durch den Antriebmechanismus 1 zeigt Figur 2b, dort sind die drei Aktoren 2 gleichverteilt um die Achse 3 mit Bildung des Lumens 6 angeordnet. Figur 2c zeigt die Stützscheibe 4 mit den Ausbuchtungen und die Haltescheibe 5 mit den Löchern an entsprechender Stelle in und durch die der Rückstellmechanismus 7 verläuft.

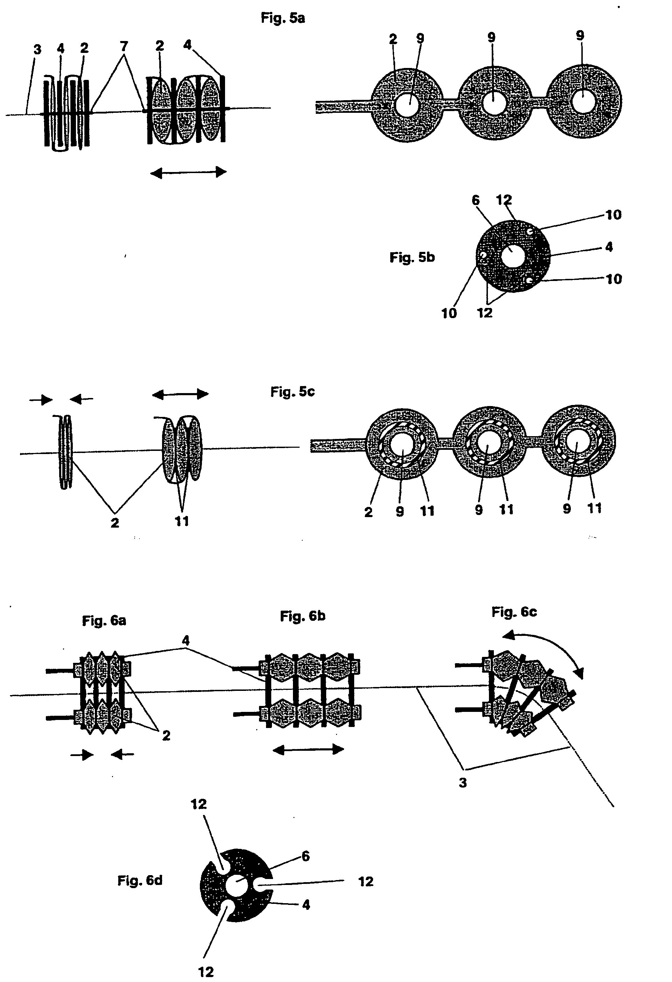

Die aller einfachste Form des Aktors 2 ist in Figur 3a dargestellt. Er besteht zunächst aus einem glatten, schlauchförmigen Gebilde mit dem Zugangskanal an einem Ende (links im Bild). Dieses Gebilde wird mäanderförmig zu dem Aktor 2 gefaltet, dabei könnten in den Knickbereichen Probleme der Füllung bzw. Evakuierung des Druckmediums durch weitere unkontrollierte Faltenbildung an diesen Stellen entstehen und damit ein unkontrollierter Druckmediumfluß. Es ist deshalb zweckmäßig, die aneinandergereihte Kissen- oder Taschenform gemäß Figur 3b zu verwenden, insbesondere bei zylindrischer Anordnung der Aktoren 2, dann nämlich ist der Knickbereich bei völliger Entleerung und maximaler Füllung und eben auch bei einem Füllzustand dazwischen definiert. Die Kissen, Kammern oder auch Taschen reihen sich dann stets in gewollter Form aneinander, bzw. drücken sich gegenseitig auseinander und halten die Mäanderform durch die Stütz- und Halteelemente 4, 5 aufrecht. Das ist in der Figurenreihe 1a bis c sowie 4a bis c für die einfache Kissenform und in 5a und bis 5c für die torusförmigen Kissen (Figur 5a) dargestellt. Sind unmittelbar benachbarte Kissen des Aktors 2 punkt- oder linienförmig wie in Figur 5c miteinander verklebt, muß die Stützscheibe 4 entfallen. Mehrere dieser Aktoren 2 können durch eine Haltescheibe 5 miteinander verbunden werden.

In Figur 1 a bis c ist das Rückstellelement 7 als seilförmiges Gebilde dargestellt, das außen an dem wurmförmigen Antriebmechanismus 1 entlangläuft und an seinen beiden Stirnseiten verankert ist. Mindestens zwei solche gleiche Rückstellelemente 7 sind für eine symmetrische Rückstellkraft nötig. Das kann aber auch in anderer Weise bewirkt werden, indem durch das Lumen ein biegsamer, an der Innenkontur anliegender, zugelastischer Schlauch oder eine.anliegende Schraubenfeder z. B. eingeführt ist. In Figur 4a bis c sind die entsprechenden Situationen der Figuren 1a bis c dargestellt, und zwar mit dem Schlauch 8 als elastisches Rückstellelement.

Die Rückstellelemente 7, 8 in der einen oder andern Form sind nur nötig, falls das selbsttätige Rückstellen nicht ausgeprägt genug erfolgt. Das selbsttätige Rückstellen kann aber auch über die punkt- oder linienförmige Verbindung (Verkleben oder Verschweißen) an vorgesehenen Bereichen unmittelbar benachbarter Kissen unterstützt werden.

Wurmartige Bewegungsfreiheit ist mit dem Antriebmechanismus gegeben, weil die drei Aktoren 2 unabhängig voneinander befüllt und evakuiert werden können, das ermöglicht die räumliche Schwenk- oder Beugefreiheit aber auch das Strecken. Die Situationen in den Figuren 1b und 1c bzw. 4b und 4c bzw. 6b und 6c zeigen das. So ist um die Situation in Figur 1c bzw. 4c bzw. 6c zu erreichen mindestens ein Aktor 2 gefüllt und gleichzeitig mindestens ein Aktor 2 geleert. Durch unterschiedlichen Befüllzustand der Aktoren sind Zwischenzustände nach Bedarf einstellbar.

Abgesehen von der Geometrie der Bauelemente des Antriebmechanismus 1, bestimmt auch die Anzahl aufeinander folgender Kissen der Aktoren 2 den Bewegungsraum und damit den Schwenkbereich der freien Stirnseite.

Für eine in engen Grenzen verharrende Geometrie des Antriebmechanismus bestehen die Aktoren 2 aus biegeschlaffem jedoch wenig dehnbarem Material, so daß mit ihnen nur eine Volumenvariation zwischen Null und einem maximal vorgesehenen Füllgrad eingestellt werden kann.

Die Verankerung des Antriebmechanismus an seinem proximalen Bereich ist für die gezielte Schwenkbarkeit des distalen, freien Endes notwendig, das kann einmal eine mechanisch feste Verankerung 13 sein wie das Festschrauben auf einer Basisplatte (Figur 1c) oder Anflanschen auf einem rohrförmigen Schaftende, aber auch - und das ist in kanalartigen Räumen sinnvoll - durch eine wiederum unabhängig von den Aktoren 2 befüll- und evakuierbare, ringförmige Kammer 13 um den proximalen Bereich, die sich bei Befüllung verhältnismäßig großflächig, druckverteilt gegen die Kanalwand drückt und damit den Antriebsmechanismus verankert (Figur 1a, links im Bild). Statt ringförmiger Kammer 13 sind auch um den Umfang verteilte, ebenfalls befüll- und evakuierbare Kissen 13 geeignet. Oberflächenunebenheiten der Kanalwand wären bis auf scharfe Spitzen kein Verankerungshindernis, da das Anpassen an die Oberfläche durch das biegeschlaffe Kissenmaterial keine Einschränkung erführe. Ein Vorteil ist, daß eine solche Kanalwand nicht notwendigerweise starr sein muß, da die kissenförmige Verankerungseinrichtung 13 im Gegensatz zu den Aktoren durchaus auch aus stärker dehnbarem Material sein kann, um unterschiedliche Kanaldurchmesser zu überbrücken (siehe Figur 1a). Der übersicht halber ist nur ein solches Verankerungssystem 13 in der Figur 1a, links, eingezeichnet, zwei solche kurz aufeinander folgende Verankerungsringe wären natürlich eine stabilere Verankerung.

Eine weitere Variante zur tatsächlichen Fortbewegung des gesamten Antriebsmechanismus 1 ist in Figur 1a eingezeichnet. Sowohl am proximalen als auch am distalen Ende befinden sich die kissenförmige Verankerungsmöglichkeiten 13, links im Bild ist sie gefüllt, rechts im Bild entleert. Streckt sich der Antriebsmechanismus 1 nun nach rechts vor und bläht die Kissen 13 auf, so daß sie sich gegen die nahe Wand pressen, besteht auch dort eine Ankerbasis. Wird dann die linke Verankerung 13 entleert, kann der Antriebsmechanismus durch Entleeren der Aktoren 2 nachgezogen werden. Dadurch kommt eine wurm- oder raupenartige Fortbewegung in die eine oder andere Richtung zustand, je nach Abfolge der Befüllung und Entleerung der zuvor vollen, basisbildenden Verankerungen 13 sowie der Aktoren 2.

### Bezugszeichenliste

- 1: Antriebsmechanismus
- 2: Aktor
- 3: Achse
- 4: Stützelement, Stützring, Stützscheibe
- 5: Halteelement, Haltering, Haltescheibe
- 6: Lumen
- 7: Rückstellelement
- 8: Rückstellelement, Schlauch, Schraubenfeder
- 9: Lumen im Aktor
- 10: Loch
- 11: Verbindungslinie
- 12: Ausnehmungen
- 13: Einrichtung zum Verankern

## Patentansprüche

1. Wurmförmiger Arbeitsmechanismus, dessen Antriebsmittel betätigbare Aktoren (2) sind, mit dem Gegenstände gehoben, fixiert, gegriffen und bewegt werden können,
der aus seiner gestreckten Achse in jede Richtung schwenkbar ist und bei Beenden der Druckeinwirkung auf seine Aktoren (2) von selbst in seine Ausgangslage zurückkehrt,
der aus mindestens drei Aktoren (2) besteht, die aus einem reißfesten, biegeschlaffen, druckmediumdichten Material sind,
jeder Aktor (2) aus einem Paket aus aneinandergereihten Kissen oder Kammern besteht, wobei unmittelbar benachbarte Kissen oder Kammern über einen Kanal miteinander verbunden sind und das Paket mindestens einen Zugangskanal hat, über den es mit Druckmittel befüllt oder das Druckmittel daraus abgepumpt wird,
die Aktoren (2) sind unter Bildung eines Lumens (6) und unter Aufrechterhaltung des Kissen- oder Kammernpakets zum wurmförmigen Arbeitsmechanismus (1) miteinander gekoppelt,
die Aktoren (2) sind unabhängig voneinander befüllbar oder evakuierbar,
das Kammervolumen jeden Aktors (2) ist durch Druckmediumbefüllung oder Druckmediumabpumpen kontinuierlich zwischen einem Maximalwert und Null einstellbar, wodurch sich der Aktor (2) durch die aneinandergereihten, entsprechend gefüllten Kissen oder Taschen bis zu einer Maximallänge streckt und/oder bis zu einer Maximalschwenkung in eine vorgegebene Richtung beugt,
**dadurch gekennzeichnet, dass**:
jeder Aktor (2) pneumatisch oder hydraulisch betreibbar und aus einem nichtmetallischen Material ist,
jeder Aktor (2) aus zwei aufeinandergelegten Folien besteht, die entlang eines vorgegebenen Linien verlaufs unter mindestens einer Zugangskanalbildung miteinander druckmediumdicht verbunden, verschweißt oder verklebt, sind;
oder
jeder Aktor (2) aus torusartigen Kissen oder Kammern aufgebaut ist, die mäanderförmig aneinander liegen
oder
jeder Aktor (2) ein faltenbalgförmiger Schlauch ist, und scheibenförmige Stützelemente (4) mit Ausnehmungen (12), in die sich die entsprechende Falte des jeweiligen Aktors (2) legt, die Aktoren (2) zusammenhalten.

2. Arbeitsmechanismus nach Anspruch 1, **dadurch gekennzeichnet, dass** unmittelbar aneinanderliegende Kissen eines Aktors (2) mindestens punktuell oder mindestens durch Linienabschnitte miteinander verbunden sind und Halteringe (5) die Aktoren (2) zusammenhalten.

3. Arbeitsmechanismus nach Anspruch 1, **dadurch gekennzeichnet, dass** eine Aufeinanderfolge von abwechselnd einem Stützring (4) und einem Haltering (5) die mäanderförmigen Faltenpakete des Aktors (2) aufrechterhält.

4. Antriebsmechanismus nach Anspruch 1, **dadurch gekennzeichnet, dass** das ein an einer außenliegenden Knickkante einliegendes Stützelement (4) eine Scheibe mit zentralem Loch zur Mitbildung des Lumens (6) ist
und
an der Stelle eines Kissenlochs (9) ebenfalls ein Loch (10) hat, so dass jeder Aktor (2) selbst auch ein Lumen (9) bildet.

5. Antriebsmechanismus nach Anspruch 1, **dadurch gekennzeichnet, dass** unmittelbar benachbarte torusförmige Kissen entlang einer Kreislinie (11) punktförmig oder linienförmig miteinander verbunden, wie verklebt oder verschweißt, sind, so dass die Mäanderform des Aktors (2) stets erhalten bleibt und der Aktor (2) selbst auch ein Lumen (9) bildet, wodurch die Stützscheiben (4) entfallen und allenfalls noch Stützringe (5) durch die innen liegenden Falten zum Zusammenhalt der Aktoren (2) notwendig sind.

6. Arbeitsmechanismus nach den Ansprüchen 1, 2, und 5, **dadurch gekennzeichnet, dass** zur Unterstützung der Beugung oder der Rückkehr in die Ausgangslage eine zugelastische Rückstelleinrichtung (7) angebracht ist.

7. Arbeitsmechanismus nach Anspruch 6, **dadurch gekennzeichnet, dass** die zugelastische Rückstelleinrichtung (8) im Lumen (6) verläuft, schlauch- oder schraubenfederartig ist und an den innen liegenden Aktorrändern anliegt oder sich anpresst.

8. Arbeitsmechanismus nach Anspruch 2, **dadurch gekennzeichnet, dass** eine elastische Rückstelleinrichtung (7) außerhalb des Lumens (6) verläuft, und zwar
im freien Winkelraum zwischen den Aktoren(2), außerhalb des Halterings (5) und innerhalb des Stützrings (4), sofern der Außendurchmesser des Halterings (5) kleiner als der Innendurchmesser des Stützrings (4) ist, oder
außerhalb des Stützringes (4) oder
in Ausnehmungen (12) am Stützring (4), die im freien Winkelraum zwischen den Aktoren an dem Stützring (4) oder der Stützscheibe (4), falls deren Durchmesser so groß ist, vorhanden sind, oder
durch Löcher in den Stützscheiben (4) und/oder, falls deren Durchmesser so groß ist wie der der Haltescheiben (5), die dort in den freien Winkelräumen zwischen den Aktoren (2) vorhanden sind.

9. Arbeitsmechanismus nach den Ansprüchen 4 und 5, **dadurch gekennzeichnet, dass** eine Rückstelleinrichtung (7) aus elastischen seilförmigen Rückstellelementen (7) besteht, die durch das Lumen (9) eines jeden Aktors verlaufen.

10. Arbeitsmechanismus nach einem der vorangehenden Ansprüche 7 bis 9, **dadurch gekennzeichnet, dass** in seinem proximalen und/oder distalen Bereich eine Verankerungseinrichtung (13) vorhanden ist, mit der/denen der Arbeitsmechanismus an vorgesehenem Ort ein- oder beidseitig fixiert werden kann.

11. Arbeitsmechanismus nach Anspruch 10, **dadurch gekennzeichnet, dass** die Verankerungseinrichtung ein verschraubbarer oder einrastender Flansch, wie ein Bayonettverschluß, ist.

12. Arbeitsmechanismus nach Anspruch 10, **dadurch gekennzeichnet, dass** die Verankerungseinrichtung (13) aus Aktormaterial oder aus dehnbarerem Material besteht und mindestens ein mit Druckmittel separat befüllbares, ringförmiges Kissen (13) ist oder aus um den Umfang mindestens einmal ringförmig verteilten, separat befüllbaren Kissen (13) besteht, das oder die sich in engen Räumen oder in Kanälen beim Befüllen gegen die Wand schmiegend presst oder pressen.

## Claims

1. Wormlike mechanism driven by actuators (2), by means of which objects can be lifted, fixed, seized, and moved,
which can be deflected into any direction from its straight axis and, when the pressure impact on its actuators (2) stops, automatically returns to its initial position,
which consists of at least three actuators (2) that are made of a tearproof, slack, and pressure medium-tight material,
each actuator (2) of which consists of a package of lined-up pads or chambers, with directly adjacent pads or chambers being connected via a channel and the package having at least one access channel, via which it is filled with the pressure medium or the pressure medium is pumped off,
the actuators (2) of which are coupled to the wormlike mechanism (1), with a lumen (6) being formed and the pad or chamber package being maintained,
the actuators (2) of which may be filled or evacuated independently of each other,
the chamber volume of each actuator (2) of which can be adjusted continuously between a maximum value and zero by filling in or pumping off the pressure medium, whereupon the actuator (2) straightens to a maximum length by the lined-up and accordingly filled pads or chambers and/or is bent into a given direction until a maximum deflection is reached,
**characterized by**:
each actuator (2) being actuated pneumatically or hydraulically and made of a non-metal material,
each actuator (2) consisting of two foils put on top of each other, which are connected, welded, or bonded along a given line in a pressure medium-tight manner with at least one access channel being formed;
or
each actuator (2) consisting of torus-like pads or chambers that are lined up in a meandering manner
or
each actuator (2) being a bellows-like hose, with disk-shaped supporting elements (4) that have recesses (12), in which the respective pleats of the actuator (2) are located, holding together the actuators (2).

2. Mechanism according to Claim 1, **characterized by** the directly adjacent pads of an actuator (2) being connected to each other at selected points or along longer linear sections at least and fixing rings (5) holding the actuators (2) together.

3. Mechanism according to Claim 1, **characterized by** the meandering pleat packages of the actuator (2) being maintained by the arrangement of support rings (4) alternating with fixing rings (5).

4. Mechanism according to Claim 1, **characterized by** the supporting element located at an outer kink edge being a disk with a central hole for the formation of the lumen (6)
and
having a hole (10) at the point of a pad hole (9), such that each actuator (2) itself forms a lumen (9).

5. Mechanism according to Claim 1, **characterized by** directly adjacent torus-shaped pads being connected, bonded, or welded to each other along a circular line (11) at selected points or along longer linear sections, such that the meandering form of the actuator (2) is always maintained and the actuator (2) itself forms a lumen (9), as a result of which the support disks (4) are no longer necessary and support rings (5), if any, serve to hold together the actuators (2) by the inner pleats.

6. Mechanism according to Claims 1, 2, and 5, **characterized by** a tenso-elastic readjusting unit (7) being installed to promote bending or the return to the initial position.

7. Mechanism according to Claim 6, **characterized by** the tense-elastic readjusting unit (8) being located in the lumen (6), having the shape of a hose or helical spring, and contacting with or pressing onto the inner actuator edges.

8. Mechanism according to Claim 2, **characterized by** an elastic readjusting unit (7) being located outside of the lumen (6), that is
in the free angular space between the actuators (2) outside the fixing ring (5) and inside the support ring (4), provided that the outer diameter of the fixing ring (5) is smaller than the inner diameter of the support ring (4), or
outside the support ring (4), or
in recesses (12) of the support ring (4), which are located at the support ring (4) or the support disk (4) in the free angular space between the actuators, provided that the latter's diameter is sufficiently large, or
in holes of the support disks (4) and/or, if their diameter is as large as that of the fixing disks (5), in the free angular spaces between the actuators (2).

9. Mechanism according to Claims 4 and 5, **characterized by** the readjusting unit (7) consisting of elastic rope-shaped readjusting elements (7) that are located in the lumen (9) of each actuator.

10. Mechanism according to one of Claims 7 through 9, **characterized by** an anchoring unit (13) being located in the proximal and/or distal area, by means of which the mechanism can be fixed at a given point on one or both sides.

11. Mechanism according to Claim 10, **characterized by** the anchoring unit being a screwable or engaging flange, like a quarter-turn (bayonet) fastener.

12. Mechanism according to Claim 10, **characterized by** the anchoring unit (13) consisting of actuator material or more elastic material and being at least one annular pad (13) that can be filled separately with the pressure medium or consisting of pads (13) that are arranged annularly along the circumference at least once and can be filled separately, with the pad or the pads pressing against the wall in close spaces or channels when it is/they are filled.

## Revendications

1. Mécanisme de travail en forme de vers dont les éléments moteurs sont des acteurs (2) pouvant être manoeuvrés et qui permet de lever, de fixer, de prendre et de déplacer des objets,
qui est orientable dans n'importe quelle direction et qui retourne dans sa position de départ dès qu'aucune pression n'est plus exercée sur ses acteurs (2),
qui est composé de trois acteurs (2) au minimum, d'un matériau résistant à la déchirure, élastique à la flexion, étanche par rapport aux milieux sous pression,
chaque acteur (2) étant composé d'un paquet de coussins ou de chambres enfilés, les coussins ou chambres immédiatement voisins étant liés entre eux par un canal, le paquet ayant au minimum un canal d'accès par lequel il peut être gonflé par un milieu sous pression ou qui permet d'en évacuer le milieu sous pression,
les acteurs (2) étant couplés entre eux pour former le mécanisme de travail en forme de vers (1), tout en formant un lumen (6) et en maintenant le paquet de coussins ou de chambres,
les acteurs (2) pouvant être gonflés ou évacués indépendamment l'un de l'autre,
le volume de chambre de chaque acteur (2) pouvant être réglé en continu entre une valeur maximale et zéro, par remplissage ou évacuation de milieu sous pression, ce qui fait étendre l'acteur (2) par les coussins ou chambres enfilés, remplis en conséquence, jusqu'à une longueur maximale et/ou qui le fait fléchir jusqu'à un pivotement maximal dans une direction donnée,
**caractérisé en ce que**:
chaque acteur (2) peut fonctionner d'une manière pneumatique ou hydraulique et qu'il est en matériau non métallique,
chaque acteur (2) est composé de deux feuilles superposées qui sont liées entre elles d'une manière étanche par rapport aux milieux sous pression, soudées ou collées le long d'un tracé de ligne donné, en formant un canal d'accès au minimum
ou que
chaque acteur (2) est construit de coussins ou de chambres de type torique juxtaposés en forme de méandres
ou que
chaque acteur (2) est un tuyau en forme de soufflet et que des éléments de support en forme de disques (4) avec des creux (12) où se pose le pli correspondant de chaque acteur (2), tiennent les acteurs (2) ensemble.

2. Mécanisme de travail selon la revendication 1, **caractérisé en ce que** des coussins immédiatement voisins d'un acteur (2) sont liés du moins ponctuellement ou du moins par des sections de ligne et que des bagues de maintien (5) tiennent les acteurs (2) ensemble.

3. Mécanisme de travail selon la revendication 1, **caractérisé en ce qu'**une succession d'une bague de support (4) en alternance avec une bague de maintien fait persister les paquets de plis en méandres de l'acteur (2).

4. Mécanisme de travail selon la revendication 1, **caractérisé en ce que** l'élément de support (4) inséré sur un bord extérieur du pli est un disque muni d'un trou centrale pour permettre aussi la formation du lumen (6)
et
qu'à l'endroit d'un trou de coussin (9) il possède également un trou (10), de sort que chaque acteur (2) lui-même forme également un lumen (9)

5. Mécanisme de travail selon la revendication 1, **caractérisé en ce que** des coussins toriques immédiatement voisins sont liés de manière ponctuelle ou linéaire, par exemple collés ou soudés, le long d'une ligne circulaire (11) de sorte que la forme en méandres de l'acteur (2) reste toujours conservée et que l'acteur (2) lui-même forme également un lumen (9), ce qui permet de renoncer aux disques de support (4) et d'utiliser tout au plus des bagues de support (5) passant à travers des plis situés à l'intérieur pour tenir les acteurs (2) ensemble.

6. Mécanisme de travail selon les revendications 1, 2 et 5, **caractérisé en ce qu'**un dispositif de rappel à élasticité de traction (7) est ajouté pour faciliter la flexion ou le retour à la position de départ.

7. Mécanisme de travail selon la revendication 6, **caractérisé en ce que** le dispositif de rappel à élasticité de traction (8) passe dans le lumen (6), présente une forme de tuyau ou de ressort cylindrique et qu'il adhère aux bords intérieurs des acteurs ou qu'il se presse sur ceux-ci.

8. Mécanisme de travail selon la revendication 2, **caractérisé en ce qu'**un dispositif de rappel élastique (7) passe à l'extérieur du lumen (6), plus exactement
dans l'angle solide libre entre les acteurs (2), à l'extérieur de la bague de maintien (5) et à l'intérieur de la bague de support (4), dans la mesure où le diamètre extérieur de la bague de maintien (5) est inférieur au diamètre intérieur de la bague de support (4), ou
à l'extérieur de la bague de support (4) ou
dans des creux (12) sur la bague de support (4) qui se trouvent dans l'angle solide libre entre les acteurs, sur la bague de support (4) ou le disque de support (4), si leur diamètre est suffisamment grand, ou
à travers des trous situés dans les disques de support (4) et/ou qui y existent dans les angles solides libres entre les acteurs (2) si leur diamètre est aussi grand que celui des disques de maintien (5).

9. Mécanisme de travail selon les revendications 4 et 5, **caractérisé en ce qu'**un dispositif de rappel (7) se compose d'éléments de rappel élastiques en forme de câbles (7) qui passent à travers le lumen (9) de chaque acteur.

10. Mécanisme de travail selon l'une des revendications précédentes 7 à 9,
**caractérisé en ce que** dans sa zone proximale et/ou distale, il existe un dispositif d'ancrage (13) permettant de fixer à l'endroit prévu le mécanisme de travail d'un seul côté ou des deux.

11. Mécanisme de travail selon la revendication 10, **caractérisé en ce que** le dispositif d'ancrage est une bride qui se fixe par vis ou qui se verrouille à la façon d'un verrouillage à baïonnette.

12. Mécanisme de travail selon la revendication 10, **caractérisé en ce que** le dispositif d'ancrage (13) est en matériau d'acteur ou en matériau élastique, et qu'il est composé du moins d'un coussin annulaire (13) que l'on peut remplir séparément de milieu sous pression ou qu'il est constitué d'un coussin gonflable séparément, régulièrement réparti de façon annulaire du moins une fois autour de la circonférence, qui dans des espaces restreintes ou dans des canaux, se serre(nt) souplement ou qui se presse(nt) contre la paroi lors du remplissage.
